# EUROPEAN PATENT APPLICATION

(11) **EP 4 005 855 A1**
(43) Date of publication of application: **01.06.2022**
(21) Application number: 21210299.0
(22) Date of filing: 24.11.2021
(51) Int. Cl.: B60L 53/10, B60L 53/14, B60L 53/53, H02J 1/08, H02J 3/32

(54) **ELECTRIC VEHICLE BATTERY CHARGING SYSTEM CAPABLE OF BEING INTERCONNECTED WITH EXTERNAL DIRECT CURRENT POWER SUPPLY INFRASTRUCTURES**

(30) Priority: 27.11.2020 IT 202000028733
(71) Applicant: Free2move Esolutions S.p.A., 20158 Milano (IT)
(72) Inventor: GUGLIELMINOTTI, Carlalberto, 20135 Milano (IT); CRUGNOLA, Giorgio, 21100 Varese (IT); LAMBERTI, Francesco, 20161 Milano (IT); ROSATI, Daniele, 28069 Trecate (IT)
(74) Representative: Lunati & Mazzoni S.r.L.

(57) **Abstract**

It is provided an electric vehicle (10) battery charging system (1), capable of being interconnected with external direct current power supply infrastructures (11), in which the infrastructure (11) is tram and/or trolleybus and comprises at least a first high potential power supply channel (11a) and a second low potential power channel (11b) so as to determine a power supply voltage, in which the system (1) comprises at least one recharging device (2) configured to be connected to an external electrical network, in such a way as to be able at least to withdraw electrical energy from the external electrical network, and to be connected to at least one first battery (EVB₁) of an electric vehicle to deliver or receive electricity to or from the first respectively battery (EVB₁), and in which the external electrical network is constituted by the infrastructure (11) and the recharging device (2) is configured to be operationally connected to the first channel (11a) and to said second channel (11b) so as to receive or transfer electricity from or to the infrastructure (11) with the power supply voltage and to modulate the power supply voltage in or out of the recharging device (2).

## Description

The present invention relates to an electric vehicle battery charging system capable of being interconnected with external direct current power supply infrastructures of the type specified in the preamble of the first claim.

In particular, the present invention relates to a DC fast-charging system adapted to be interconnected to external power infrastructures, preferably already existing, such as tramways and/or trolleybuses.

As is known, the lines on which public transport means move above all, such as trams or trolley buses, substantially comprise two supply channels to which parts of said public means are interconnected.

As regards the feeding of the trams, generally, the direction rails form one of the channels, while the second channel is substantially made from a cable extending, along the line, on the top of the tram and reachable from it by means of a pantograph.

The two power supply channels therefore distribute energy to the tram in the form of direct electric current flowing inside the channels with a predetermined voltage in relation, of course, to the power supplied by the electrical generators that feed the electrical network entering the two channels.

On the other hand, trolleybuses are generally equipped with a double-arm pantograph, each of which is connected to a respective power supply channel. The two channels are generally made up of respective cables that run along the trolleybus line on top of it. Therefore, in this case, the voltage is applied to the ends of the two arms of the pantograph.

During operation, both trams and trolley buses draw and/or discharge electrical power from the supply channels. When the speed of the vehicles is substantially at steady state, they draw a constant quantity of electrical power from the electrical network and, therefore, the latter distributes direct current with an almost constant supply voltage, substantially around 750 V. When, on the other hand, the pace is modified, particular situations may occur in which the distribution of electrical energy varies within the power supply channels.

In particular, when the tram or trolleybus accelerates, the demand for electrical power is such that the current absorption by the means of transport leads to a local voltage drop on the electrical network which can be considerable. In the case of tram lines or trolleybuses, the voltage drop can even be equal to 200-250 V. Conversely, modern trams or trolley buses are now configured in such a way as to be able to perform regenerative braking or to introduce electricity during braking, within the electrical network, i.e. in the power supply channels.

Each regenerative braking therefore translates, contrary to acceleration, as a local voltage increase on the power line.

The known technique described includes some important drawbacks.

In particular, in consideration of the power surges present on the power supply channels connected to the electricity network deriving from the operating modes of the trams or trolleybuses, in order to ensure correct and efficient handling of the means of transport, it is necessary to provide that the procession distances between trams remain within predetermined tolerances.

In particular, the distance between the trams must be such as to allow the accelerating tram to exploit the excess power supplied by the tram in front of it during regenerative braking.

The aforementioned problems can also be aggravated by the presence of other devices powered by the same electrical network.

In addition, over the last few years, various charging systems for electric vehicles have been developed that tend to centralize the conversion of power from electric grids in order to simplify the interface with the electricity grid itself and allow fast charging of electric vehicles. from a few tens of kW, typically 50 kW, up to a few hundred kW, typically 350 kW. Considering, however, that a direct current charging station of the DC Fast Charge type generally requires an availability of at least 50 kW, the presence of a few charging points of this type has the important drawback of requiring the construction of an electrical substation. of medium voltage distribution, with a power of a few hundred kW which not only aggravates the total cost of the electrical system for recharging vehicles, but is often not feasible from the point of space and technical safety constraints, especially in centers densely populated.

In this situation, the technical task underlying the present invention is to devise an electric vehicle battery charging system capable of being interconnected with external direct current power supply infrastructures capable of substantially obviating at least part of the aforementioned drawbacks.

Within the scope of said technical task, an important object of the invention is to obtain an electric vehicle battery charging system capable of being interconnected with external direct current power supply infrastructures that is able to reduce the overall dimensions and the necessary installation operations necessary for the system to be made operational within, for example, a city fabric in which spaces are, as is known, reduced.

Another important object of the invention is to provide an electric vehicle battery charging system capable of being interconnected with external direct current power supply infrastructures that is able to functionally collaborate with the electrical network to which it is connected in such a way as not to excessively burden on of it. In conclusion, a further object of the invention is to provide an electric vehicle battery charging system capable of being interconnected with external direct current power supply infrastructures which allows to easily increase the distribution of the recharging points for electric vehicles.

The technical task and the specified aims are achieved by an electric vehicle battery charging system capable of being interconnected with external direct current power supply infrastructures as claimed in the attached claim 1.

Preferred technical solutions are highlighted in the dependent claims.

The characteristics and advantages of the invention are clarified below by the detailed description of preferred embodiments of the invention, with reference to the accompanying figures, in which:
the **Fig. 1** shows a functional diagram of an electric vehicle battery charging system capable of being interconnected with external direct current power supply infrastructures in which there is a plurality of charging devices arranged along a tramline;
the **Fig. 2** illustrates a functional diagram of an electric vehicle battery charging system capable of being interconnected with external direct current power supply infrastructures in which the system is connected to a tramline;

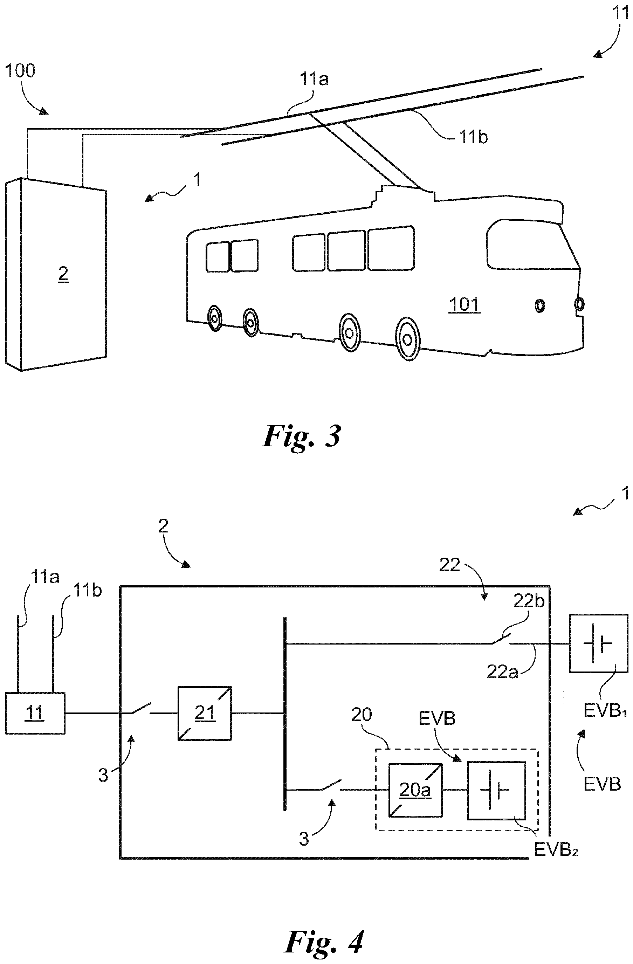

the **Fig. 3** is a functional diagram of an electric vehicle battery charging system capable of being interconnected with external direct current power supply infrastructures in which the system is connected to a trolleybus line; and
the **Fig. 4** shows a functional diagram of a charging device of the electric vehicle battery charging system capable of being interconnected with external direct current power supply infrastructures.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as carried out in the ICAO International Standard Atmosphere (ISO 2533: 1975).

With reference to the Figures, an electric vehicle battery charging system capable of being interconnected with external direct current power supply infrastructures according to the invention is globally indicated with the number **1**.

The infrastructures **11** of an external power supply can be of various kinds. Preferably, the infrastructures 11 with which the system 1 interfaces already exist and are not created ad hoc.

Furthermore, the infrastructure 11 is preferably operating in direct current in such a way as to avoid having to convert signals into alternating current.

Therefore, the infrastructure 11 can be, for example, tramway and/or trolleybus. Therefore, preferably, the infrastructure 11 comprises at least a first supply channel **11a** and a second supply channel **11b**.

The first channel 11a is substantially a high potential power supply channel. The second channel 11b, on the other hand, is substantially a low potential supply channel. Therefore, the first channel 11a and the second channel 11b determine a supply voltage.

The electric energy exchanged with said supply voltage is, as anticipated, for example destined for the use of transport means **101**. The transport means 101 can be, for example, public means such as trams or trolley buses and, in general, means suitable for interacting with the infrastructure 100.

Therefore, for example, the first channel 11a can be constituted by an overhead conductor with respect to a road on which the mean 101 moves and extending along a predetermined path and the second channel 11b can be constituted by tracks, extending along the path on which the vehicle moves. This example substantially coincides with a conventional configuration of a tramway.

Alternatively, or simultaneously, the second channel 11b can also consist of a second case. This second configuration is essentially typical of trolleybuses.

The system 1 is adapted to allow the recharging of electric energy for the operation of an electric vehicle **10**.

The electric vehicle 10 can be of any type. Of course, the electric vehicle 10 is also a hybrid vehicle including various possible power supplies, including fuel. Essentially, the electric vehicle 10 comprises at least one electric vehicle battery **EVB**.

EVB batteries are substantially particular electric batteries, also known by the term traction batteries, which differ from starter, lighting and ignition batteries because they are designed to supply energy for prolonged periods of time. Of course, EVB batteries are now extremely well known in the current state of the art.

In particular, preferably, the electric vehicle 10 comprises a first electric vehicle battery **EVB₁**.

The first EVBbatteryi is basically an EVB battery. Therefore, it is a traction battery. The system 1, therefore, comprises a recharging device **2**.

The recharging device 2 is configured to recharge the first EVB battery₁ when connected to it, preferably after connection to the electric vehicle 10.

Naturally, the latter can comprise unions arranged on the body or hull and suitable for allowing the connection of the recharges 2 indirectly with the first EVBbattery₁. Therefore, the recharging device 2 is configured to be connected to the first battery EVB₁. In particular, the recharging device 2 is configured to deliver or receive electrical energy to or from the first battery EVB₁, respectively.

Furthermore, the recharging device 2 is configured to be connected to an external electrical network.

The external electrical network could be a domestic network or an industrial network, for example capable of supplying, on request, electrical energy in the form of alternating current AC to be converted into direct current.

However, advantageously, the external electrical network is constituted by the infrastructure 11. Therefore, the external electrical network is already set up to supply electrical energy with direct current at the supply voltage.

The recharging device 2 is therefore configured at least to withdraw electrical energy from the external electrical network, that is, from the infrastructure 11. The electrical energy thus drawn can, therefore, be made available to the first battery EVB₁ to recharge it.

Advantageously, in detail, the recharging device 2 is configured to be operatively connected to the first channel 11a and to the second channel 11b.

In this way, the recharging device 2 can, when interconnected, receive or release electrical energy from or to the infrastructure 11. The electrical energy is exchanged, of course, the supply voltage.

To improve the use, therefore, the recharging device 2 is also configured to modulate the supply voltage at the input or output of the recharging device 2.

In this regard, the recharging device 2, in more detail, preferably also comprises a converter **21**. The converter 21 is preferably bidirectional, i.e. it is capable of operating equivalently both at the input and at the output.

The converter 21 is therefore configured to be operationally connected between the channels 11a, 11b and the first battery EVB₁. The converter 21 is, therefore, the element designed to modulate the signal coming from the infrastructure 11 to the user, that is to the first battery EVB₁.

Therefore, the converter 21 is configured to vary, on command, the input or output supply voltage to or from the first battery EVB₁.

The converter 21 can therefore, for example, consist of a DC-DC converter adapted to modulate in voltage the direct current signal coming from the channels 11a, 11b. Of course, the charging device 2 can also include further elements.

For example, the recharging device 2 can also include at least one storage apparatus **20**.

The accumulation apparatus 20 is substantially an energy accumulation element that is capable of allowing the storage of electrical energy in such a way as to be able to store it and use it when necessary or required.

The accumulation apparatus 20 is, therefore, preferably available in connection with the external electrical network, that is the infrastructure 11. The accumulation apparatus 20 can define, inside the recharging device 2, at least one configuration in which connected to the infrastructure 11 and at least one configuration in which it is not connected to it. Furthermore, the accumulation apparatus 20 is preferably available in connection also, or alternatively, with the first battery EVB₁. Therefore, the accumulation apparatus 20 can define, inside the recharging device 2, also at least one configuration in which it is connected to the first battery EVB₁ and at least one configuration in which it is not connected to it.

In general, the accumulation apparatus 20 is able to receive electrical energy from the infrastructure 11, or even from the first battery EVB₁ itself, and deliver electrical energy to the first battery EVB₁.

Advantageously, the accumulation apparatus 20 may not comprise a simple conventional battery.

The accumulation apparatus 20, in fact, can comprise at least a second battery **EVB₂** of electric vehicle.

The second battery EVB₂ is essentially an EVB battery as well. Therefore, in other words, it is a traction battery.

The second battery EVB₂, therefore, allows to carry out recharges of the first battery EVB₁, for example in fast or even ultra-fast charge mode.

Naturally, the accumulation apparatus 20 and, therefore, the second battery EVB₂ are configured to accumulate energy, over time, especially from the infrastructure 11.

Furthermore, preferably but not necessarily, the second battery EVB₂ is of the same type as the first battery EVB₁.

Furthermore, it is possible to supply the recharging device 2 with a second battery EVB₂ which can be substantially any used or second-hand EVB battery.

The storage apparatus 20, in addition, preferably comprises an auxiliary converter **20a**.

If present, the auxiliary converter 20a is configured to be operationally connected between the infrastructure 11 and the second battery EVB₂ and between the first battery EVB₁ and the second battery EVB₂. In other words, the auxiliary converter 20a connects the second battery both with the infrastructure 11, through the converter 21, and with the first battery EVB₁.

For example, the interconnection of auxiliary converter 20a, converter 21 and first battery EVB₁ can be realized with a DC-bus.

The auxiliary converter 20a is, therefore, the element designed to modulate the signal coming from the infrastructure 11 to the second battery EVB₂.

Therefore, the auxiliary converter 20a is configured to vary, on command, the input or output supply voltage to or from the second battery EVB₂.

The auxiliary converter 20a can therefore, for example, consist of a DC-DC converter adapted to modulate the direct current signal coming from the converter 21 in voltage. Basically, therefore, the auxiliary converter 20a can be of the same type as the converter 21.

Furthermore, the charging device 2 can comprise, or be connected to, a connecting device **22**.

The connection device 22 is preferably configured to allow the connection, on command, between the converter 21 and the electric vehicle 10.

In particular, the connection device 22 is configured to allow the first battery EVB₁ operatively connected to the converter 21.

The connecting device 22 preferably comprises a connector **22a**.

The connector 22a is preferably configured to connect the converter 21 to the first battery EVB₁.

The connector 22a can therefore be presented as a simple cable, possibly equipped with a plug to be inserted into the charging socket of the electric vehicle 10. Or, the connector 22a can include a column operatively connected to the converter 21 from which a plug emerges.

The connection device 22, therefore, can also comprise control means **22b**.

If present, the control means 22b are configured to allow to control the delivery of electrical energy from the converter 21 to the first battery EVB₁.

The control means 22b can therefore include a switch that can be controlled manually by a user or by an automatic control system.

The control means 22b can therefore be arranged on the connector 20, possibly on the plug or also on the column in such a way as to allow to control the recharging of the first battery EVB₁, or of the electric vehicle 10.

The recharging device can include selection means **23**.

If present, the selection means 23 are configured to allow the infrastructure 11 or the accumulation apparatus 20 to be selectively connected or disconnected from the converter 21. In particular, the selection means 23 can allow to control the operating modes of the system 1 even when charging the first battery EVB₁. Therefore, for example, through the selection means 23 it is possible to force the system 1 to discharge only the second battery EVB₂ in the first battery EVB₁, or it is also possible to disconnect the second battery EVB₂ and allow only the infrastructure 11 to charge the first battery EVB₁. Of course, charging can also be carried out simultaneously by the infrastructure 11 and second battery EVB₂.

The selection means 23 can therefore include for example switches arranged along the connection between the infrastructure 11 and the converter 21 and / or between the converter 21 and the storage apparatus 20, possibly between the converter 21 and the auxiliary converter 20a.

The selection means 23 can also be controlled from the outside by a user or can also be managed by an automatic control system.

The system 1, advantageously, can also include a plurality of recharging devices 2. The recharging devices 2 are, therefore, preferably distributed along the infrastructure 11. Furthermore, they are configured to be operationally connected, mutually in parallel, to the power supply channels 11a, 11b.

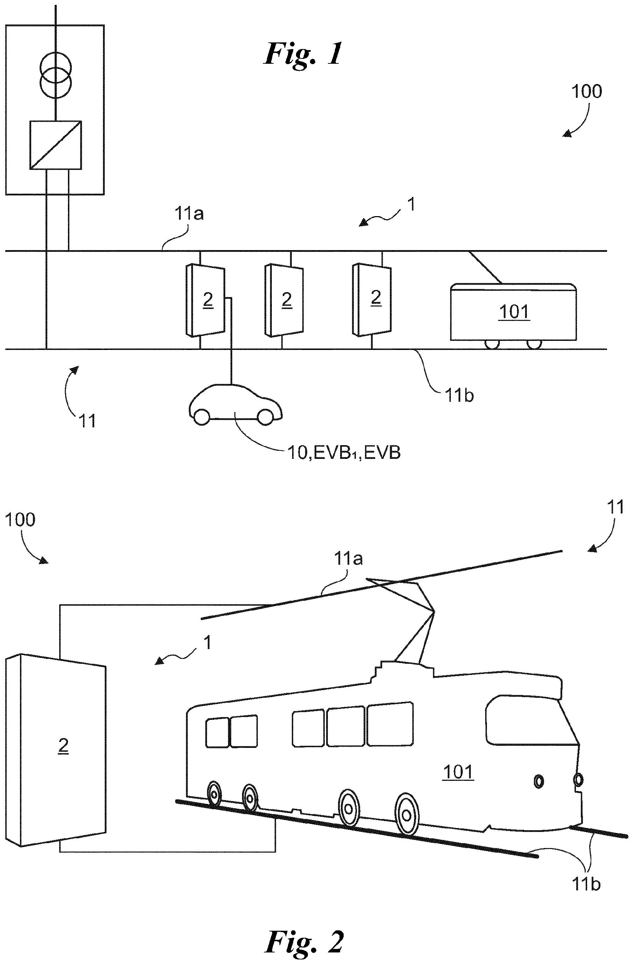

This configuration, shown for example in Fig. 1, allows any number of recharging devices 2 to be connected to the same infrastructure 11.

Naturally, the system 1 and the infrastructure 11, as a whole, can create a particular transport line. **100**.

The transport line 100, therefore, includes the system 1 and the infrastructure 11. Naturally, the transport line can also include one or more means of transport 101. The means of transport 101 are therefore mobile along the infrastructure 11 since they are substantially powered by it.

In addition, the conveyor line defines stopping zones. The stopping areas are zones in which the transport means 101 locally vary their own movement speed, braking or accelerating. For example, a stopping zone can coincide with an intersection, or with a road section where traffic is affected by the presence of vertical signs, such as traffic lights or other.

Advantageously, in the transport line 100, each of the recharging devices 2 is preferably arranged in proximity to the stopping points.

Furthermore, each of the recharging devices 2 is configured to receive energy when one of the transport means 101 performs a regenerative braking at the stopping point and to deliver electrical energy when one of the transport means 101 accelerates at the point of arrest.

Naturally, the control of the recharging devices 2 can be carried out by means of programmable processors which substantially implement an automatic system.

The control can also be carried out remotely, even from a centralized office. However, the recharging devices 2 are distributed along the infrastructure 11 and, interacting with them, define a stabilization system of the transport line 100 whose stabilizers, consisting of the recharging devices 2, are incorporated, i.e. embedded, in the infrastructure 11 in a distributed manner.

The operation of the recharging system for electric vehicle adapted to be interconnected with external power infrastructures 1 previously described in structural terms is substantially defined by the operation method.

In fact, the invention comprises a new process for stabilizing the transport line 100. The process essentially comprises at least two alternating phases: a receiving phase and a dispensing phase.

In the receiving phase, preferably, the recharging device 2 receives energy when the transport means 101 performs a regenerative braking at the stopping point near which the recharging device 2 is arranged.

In the dispensing step, preferably, the recharging device 2 supplies energy when the transport means 101 achieves an acceleration, for example due to a departure or a change of speed, in the vicinity of which the recharging device 2 is arranged. Therefore, the management apparatus, or processor, which manages the flow of energy managed by the recharging devices 2, is adapted to substantially stabilize the power supply voltage of the infrastructure 11 which is no longer sensitive to the sudden reduction and increase effects due to the local demands of the means of transport 101 in transit.

The recharging system 1 for electric vehicle batteries adapted to be interconnected with external power supply infrastructures according to the invention achieves important advantages.

In fact, the fact of interconnecting the recharging devices 2 directly to the channels 11a, 11b allows to reduce the overall dimensions of the system 1.

Furthermore, the recharging devices 2 can be easily installed on the infrastructure 11 and, therefore, the operations necessary to make operating system 1 are very small.

In addition, the electric vehicle recharging system adapted to be interconnected with external power supply infrastructures is able to functionally collaborate with the electricity network to which it is connected in such a way as not to place excessive burden on it.

On the contrary, the system 1 allows to stabilize the infrastructure 11 to which it is connected since it can require the storage apparatus 20 and also the first battery EVB₁ of the electric vehicle 10 itself, the energy necessary to compensate for the effects due to the movement of transport means 101 along a transport line 100 on which the infrastructure 11 extends.

Therefore, the implementation of system 1 is obviously very advantageous within city fabrics where spaces are limited, but the infrastructures are already developed. In particular, the system 1 makes it possible to efficiently implement various recharging columns, which include the recharging devices 2, within a city network by distributing them along the routes of the public transport lines.

The invention is susceptible of variants falling within the scope of the inventive concept defined by the claims.

In this context, all the details can be replaced by equivalent elements and the materials, shapes and dimensions can be any.

## Claims

1. Electric vehicle (10) battery charging (EVB) system (1) capable of being interconnected with external direct current power supply infrastructures (11),
- said infrastructure (11) being tram and/or trolleybus and comprising at least a first high potential power supply channel (11a) and a second low potential channel (11b) so as to determine a power supply voltage,
- said system (1) comprising at least one recharging device (2) configured to be connected to an external electrical network, in such a way as to be able at least to receive electrical energy from said external electrical network, and to be connected to at least one first battery (EVB₁) of an electric vehicle to deliver or receive electrical energy to or from said first battery (EVB₁),
and **characterized by** that
- said external electricity network is constituted by said infrastructure (11), and
- said recharging device (2) is configured to be operationally with connected to said first channel (11a) and to said second channel (11b) so as to receive or release electrical energy from or to said infrastructure (11) with said power supply voltage and to modulate said power supply voltage into or out of said recharging device (2).

2. System (1) according to claim 1, wherein said charging device (2) comprises at least one bi-directional converter (21) configured to be operatively connected between said supply channels (11a, 11b) and said first battery (EVB₁) to vary, on command, said input or output supply voltage to or from said and said first battery (EVB₁).

3. System (1) according to any one of the preceding claims, wherein said recharging device (2) comprises at least a storage apparatus (20) provided in connection with said infrastructure (11) and/or said first battery (EVB₁) at least to receive electrical energy from said infrastructure (11) or said first battery (EVB₁) and deliver electrical energy to said first battery (EVB₁).

4. System (1) according to any one of claims 2-3, wherein said charging device (2) a connecting device (22) configured to allow the connection, on command, between said converter (21) and said electric vehicle (10) so as to allow to operatively connect said first battery (EVB₁) to said converter (21).

5. System (1) according to claim 4, wherein said connecting device (22) comprises a connector (22a) configured to connect said converter (21) and said first battery (EVB₁) of said electric vehicle (10) and control means (22b) configured to allow to control the delivery of electrical energy from said converter (21) to said first battery (EVB₁).

6. System (1) according to at least claims 2 and 3, comprising selection means (23) configured to allow to selectively connect or disconnect said converter (21), said infrastructure (11) or said apparatus of accumulation (20) during the recharging of said first battery (EVB₁).

7. System (1) according to any preceding claim, a plurality of charging devices (2) distributed along said infrastructure (11) and configured to be operatively connected, mutually in parallel, in said power supply channels (11a, 11b).

8. Transport line (100) comprising a system (1) according to any preceding claim and said infrastructure (11).

9. Transport line (100) according to claims 7 and 8, comprising one or more transport means (101) movable along said infrastructure (11) and defining stopping zones in which said transport means (101) locally vary their own speed of movement, braking or accelerating, and wherein each of said recharging devices (2) is arranged in proximity of said stop points and is configured to receive energy when one of said transport means (101) performs a regenerative braking in correspondence to said stopping point and to deliver electric energy when one of said transport means (101) accelerates in proximity to said recharging devices (2).

10. Process for stabilizing a transport line (100) according to claims 8-9, **characterized in that** it comprises the alternative phases of:
- receiving wherein said recharging device (2) receives energy when said transport means (101) performs a regenerative braking at said stopping point in the vicinity of which said recharging device (2) is arranged, and
- delivery in which said recharging device (2) delivers electricity when said transport means (101) performs an acceleration in proximity of said recharging device (2).
